# EUROPEAN PATENT APPLICATION

(11) **EP 1 357 327 A1**
(43) Date of publication of application: **29.10.2003**
(21) Application number: 02425263.7
(22) Date of filing: 24.04.2002
(51) Int. Cl.: F16M 11/04

(54) **Articulated arm for supporting electronic devices**

(71) Applicant: E.T.A. S.p.A., 22035 Canzo (Como) (IT)
(72) Inventor: De Poorter, Christian, 20154 Milano (IT)
(74) Representative: Tansini, Elio Fabrizio

(57) **Abstract**

An articulated arm, preferably for supporting electronic apparatus, comprises a first connecting beam (4) rigidly connectable to a fixed structure, at least one second connecting beam (5) consecutively in engagement with the first beam (4) and at least one articulation element (6) operatively active between the first beam (4) and second beam (5). The articulation element (6) comprises a first portion (7a) having an engagement lug (8a) insertable in the first beam (4), a second portion (7b) rotatably linked to the first portion (7a) and having an engagement lug (8b) insertable in the second beam (5), and first connecting means (9) joining the first portion (7a) to the second portion (7b) and placed inside the articulation element (6).

## Description

The present invention relates to an articulated arm, preferably for supporting electronic devices.

It is known that modern machine tools are provided with control panels performing an interface function between the machine and the user. Generally, these panels that in addition to the electronic managing part, may also comprise data entry means such as keyboards and/or cursors and means for control of the machine operation, such as screens or liquid-crystal displays, are connected with the machine through suspension systems involving articulated arms.

The suspensions systems are used for the purpose of enabling an operator to manage working while keeping a safety distance from the tool.

In addition, these suspension systems enable the amount of the vibrations transmitted from the machine to the electronic control units to be reduced.

Support devices are known that comprise an articulated arm fastened at a first end thereof to the machine framework and carrying a support structure for the electronic units, at the opposite end.

The articulated arm is usually made up of a first beam integral with the machine and at least one second beam pivotally linked to the first one for rotation about a vertical articulation axis.

Generally the beams of known support devices have a square or rectangular section, defined by a single closed profile within which the electric cables connecting the apparatus to the machine tools are caused to run.

The beams are mutually connected by a pin introduced into both the contiguous ends of the two beams, or by an articulated joint consisting of two portions rotating with respect to each other, each of them being fastened to the respective beam by conventional connecting means, typically visible screws accessible from the outside.

Devices further comprising flexible covers surrounding and sealing each articulated joint are also known.

The support devices of the known art briefly discussed above have some drawbacks and are susceptible of improvement under different points of view.

First of all, the articulated arms of the known art usually do not enable an easy inspection and optional removal of the cables, since the beams are closed and screwed down to the articulation elements.

In addition, the connecting articulated joints are not aesthetically agreeable because all the fastening screws can be seen from the outside.

Finally, the requirement of positioning/removing all the fastening screws makes assembling/disassembling of the arm difficult.

Under this situation the technical task underlying the present invention is to conceive a support device capable of obviating the mentioned drawbacks.

In particular, it is an aim of the present invention to provide a support device comprising an articulated arm that can be easily and quickly disassembled.

It is another aim of the present invention to provide an articulated arm enabling easy access to the cables running inside it.

It is a further aim of the present invention to provide an aesthetically agreeable articulated arm. In particular, the present invention aims at providing an articulated arm capable of concealing the fastening means such as screws and bolts from the sight.

Finally, it is a still further aim of the present invention to provide a support device made up of modular parts that are interchangeable and can be easily assembled.

The technical task mentioned and the aims specified are achieved by an articulated arm having the features set out in one or more of the appended claims.

Description of a preferred but not exclusive embodiment of a support device, in particular for electronic apparatus comprising an articulated arm in accordance with the invention is now given by way of non-limiting example with the aid of the accompanying drawings, in which:
- Fig. 1 is a perspective view of a support device comprising two holding structures for electronic apparatus and an articulated arm in accordance with the invention;
- Fig. 2 is a side perspective view of a detail of the support device shown in Fig. 1;
- Fig. 2a shows a detail of the device in Fig. 2 seen in a direction as shown by arrow A;
- Fig. 3 is an exploded view of the articulated arm in Fig. 1;
- Fig. 4 is a sectional side view of the articulated arm in Fig. 1;
- Fig. 5 is a cross-section of a first detail of the articulated arm in Fig. 1;
- Fig. 6 is an exploded view of a detail of one of the holding structures in Fig. 1;
- Fig. 7 is a cross-sectional view of a first detail of the holding structure referred to in Fig. 6;
- Fig. 8 is a cross-sectional view of a second detail of the holding structures referred to in Fig. 6;
- Fig. 8a shows an alternative embodiment of the detail in Fig. 8;
- Fig. 9 is a cross-sectional view of a first element associated with the holding structures in Fig. 1;
- Fig. 10 is a cross-sectional view of a second element associated with the holding structures in Fig. 1;
- Fig. 11 is a cross-sectional view of a third element associated with the holding structure in Fig. 1.

With reference to the drawings, a support device for electronic apparatus of the type employed in the machine tool field, for supporting suspended control panels for example, has been generally identified by reference numeral 1.

The support device 1 is substantially made up of one or more holding structures 2, such shaped that they can receive apparatus of different shapes and sizes and linked to a respective fixed structure, a framework of a machine tool (not shown) for example, through an articulated arm 3. The articulated arm 3 has a first end 3a secured to the machine tool and a second end 3b opposite to the first one 3a, connected to the holding structure or structures 2.

In the embodiment shown in the accompanying figures, the support device 1 comprises a first holding structure 2a, directly connected to arm 3, and a second holding structure 2b mounted to the first holding structure 2a.

The articulated arm 3 consists of a first connecting beam 4, carrying the first end 3a of arm 3, and of one or more second beams 5 consecutively in engagement with each other and in alignment with the first beam 4.

Beams 4, 5 are connected to each other by a plurality of articulation elements 6, each of which enables a relative rotation between two adjacent beams 4, 5 around a respective axis Y.

In particular, in the preferred embodiment shown, the articulated arm 3 in addition to the first beam 4, only has a second end beam 5 which is rotatably connected to the first beam 4.

Arm 3 is linked to the machine tool with the rotation axis Y in a vertical position, so that the operator assigned to the machine can manually move the holding structures 2 and the apparatus contained therein in a horizontal plane about the rotation axis.

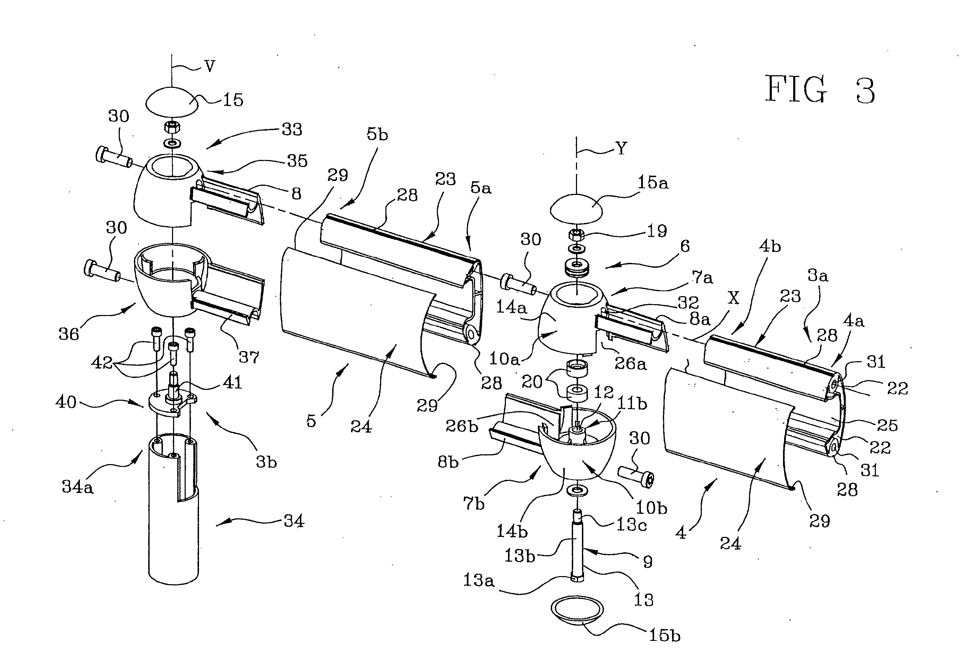

As clearly shown in Fig. 3, the articulation element 6 comprises a first portion 7a having an engagement lug 8a insertable in the first beam 4 and a second portion 7b having an engagement lug 8b insertable in the second beam 5. Advantageously, the first portion 7a and second portion 7b have the same conformation.

The first portion 7a and second portion 7b of the articulation element 6 are rotatably linked to each other to rotate about the rotation axis Y.

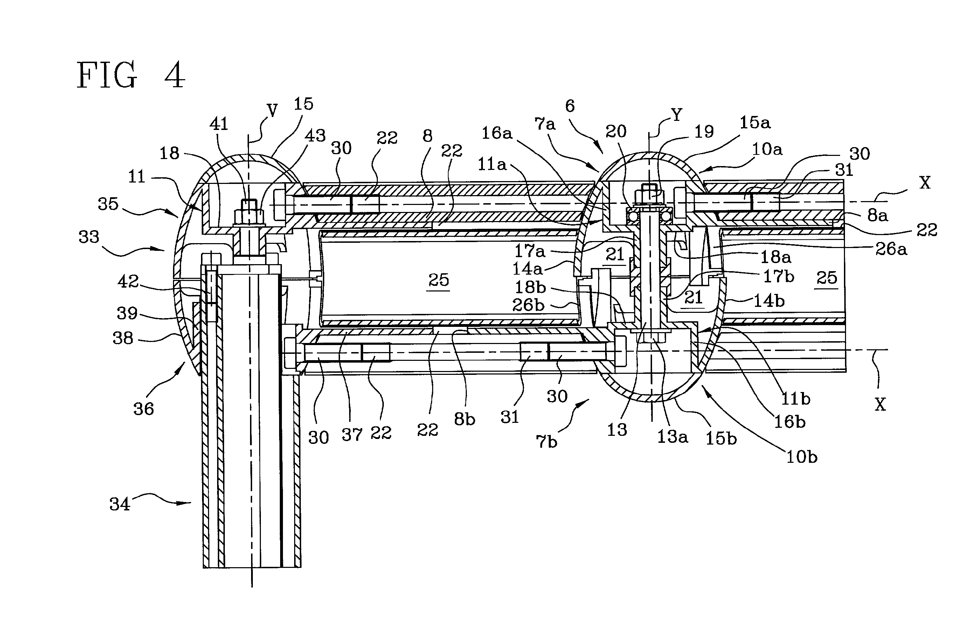

For the purpose, completely housed within the articulation element 6 is first connecting means 9 joining the first portion 7a to the second portion 7b. Advantageously, as viewed from Figs. 3 and 4, each portion 7a, 7b of the articulation element 6 has an outer shell 10a, 10b extending around the rotation axis Y, and an open-ended element of substantially tubular shape 11a, 11b fastened to the inside of shell 10a, 10b and coaxial with the rotation axis Y itself.

The two tubular elements 11a, 11b, when portions 7a, 7b are associated to form the entire articulation element 6, lie consecutively of each other along the rotation axis Y, to define an engagement seat 12 adapted to receive the first connecting means 9.

Preferably, the first connecting means 9 comprises a first pin 13 coaxially fitted in the engagement seat 12.

In the preferred embodiment shown, the outer shell 10a, 10b of each portion 7a, 7b has a substantially semi-ellipsoidal shape and consists of a main body 14a, 14b and an end cap 15a, 15b removably connected to the main body 14a, 14b. Consequently, the entire articulation element 6 externally has the shape of an ellipsoid provided with two end caps 15a, 15b disposed along the rotation axis Y. Due to the particular shape of the articulation element 6, the ends 4b, 5a, 5b of the beams 4, 5 associated with it have a concavity the shape of which matches that of the articulation element 6 itself, as viewed from Fig. 3.

The inner tubular element 11a, 11b of each portion 7a, 7b of the articulation element 6 extends along the main axis of the ellipsoid which is coincident with the rotation axis Y.

In particular (Fig. 4), the tubular element 11a, 11b is formed of a first portion 16a, 16b of greater diameter located at the respective end cap 15a, 15b, and of a second portion 17a, 17b of smaller diameter, connected to the first portion 16a, 16b through a disk-shaped wall 18a, 18b orthogonal to the rotation axis Y.

The first connecting pin 13 is a hexagonal-head screw 13a with a smooth shank 13b and threaded end 13c on which a first nut 19 is screwed.

The head 13a of screw 13 abuts against the disk-shaped wall 18a; 18b of one of the two portions 7a; 7b of the articulation element 6, whereas the first nut 19 abuts against the disk-shaped wall 18a; 18b of the other portion 7a; 7b.

More specifically, a ball bearing 20 is interposed between the nut 19 and the respective disk-shaped wall 18a, which ball bearing can be possibly replaced by other known elements for friction reduction, herein not further described, facilitating the relative rotation between the two portions 7a, 7b. Screw 13 keeps integral with the portion associated with head 13a.

The first portion 7a and second portion 7b delimit a chamber 21 extending around the rotation axis Y. In more detail (Fig. 4), this chamber 21 is defined between the outer shell 10a, 10b and the inner tubular element 11a, 11b of the articulation element 6.

Extending from each of said first and second portions 7a, 7b, along a direction X substantially orthogonal to the rotation axis Y and parallel to the longitudinal extension of the beam 4, 5 connected therewith, is the respective engagement lug 8a, 8b.

The connecting beam 4, 5 has a first housing seat 22 extending at least partly along the longitudinal extension direction X of the beam 4, 5 itself and the shape of which matches that of the lug 8a, 8b of the respective portion 7a, 7b.

In more detail (Fig. 3), each beam 4, 5 comprises a structural element 23 and a closing element 24 removably in engagement with the structural element 23 along the whole longitudinal extension of the beam 4, 5 itself.

The structural element 23 and closing element 24 define a hollow space 25 extending along the beam 4, 5 for passage of electric cables (not shown) for example, that from the machine reach the electronic apparatus.

Advantageously, the closing element 24 is snap-fitted on the structural element 23 so as to facilitate inspection of said cables.

To ensure a passage continuity from the machine to the electronic apparatus and define a path of travel extending along the whole arm 3, portions 7a, 7b of the articulation element 6 each have an opening 26a, 26b in the outer shell 10a, 10b (Fig. 3), to bring the hollow passage spaces 25 of the corresponding beams 4, 5 into communication with each other through chamber 21 (Fig. 4).

Advantageously, the structural element 23 consists of an extrusion preferably of aluminium, having at least one closed profile 27 in cross-section to ensure the necessary torsional stiffness to the beam 4, 5.

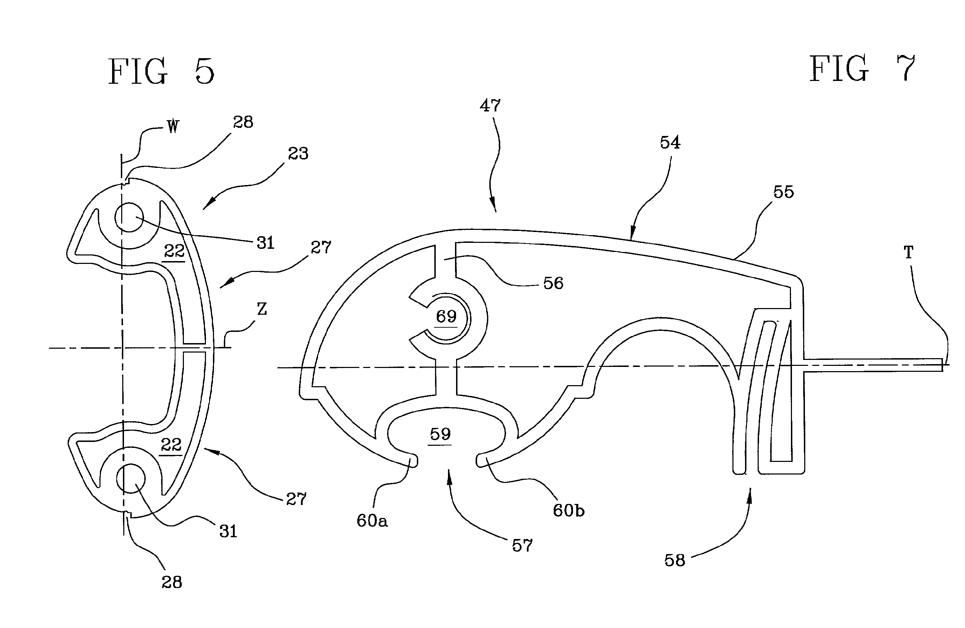

As shown in Fig. 5, the cross-section of the structural element 23 is defined by two closed profiles 27 symmetrically disposed about a symmetry axis Z exhibited by the beam 4, 5 in the section plane. The section as defined by the two closed profiles 27, mainly extends along an extension direction W perpendicular to the symmetry axis Z, with substantially an inverted "C" conformation (as shown in Fig. 5) and further has two engagement grooves 28 placed at opposite ends along such an extension direction W and into which the closing element 24 engages so as to define a full beam 4, 5 of substantially elliptical section.

The closing element 24 is preferably made up of an extrusion that in cross-section has a single curved wall (Fig. 3) terminating with two opposite ends 29 to be snap-fitted in the engagement grooves 28 of the structural element 23.

Each of the closed profiles 27 of the structural element 23 further defines one of the first housing seats 22 conforming in shape to the engagement lug 8a, 8b.

The engagement lugs 8a, 8b inserted in the appropriate seats 22 are locked therein through appropriate second connecting means 30 of a conventional type such as screws or pegs.

Preferably, the second connecting means 30 is operatively active along the longitudinal extension of each lug 8a, 8b so that the closed profile 27 of each structural element 23 further has a second housing seat 31 adapted to receive said second connecting means 30 that appears to be completely inserted in the articulated joint and in the respective beam, being concealed from the sight after assembling of the product.

In the embodiment shown, the second connecting means 30 consists of a screw inserted in an appropriate hole 32 formed in the shell 10a, 10b of each portion 8a, 8b. Screw 30 is engaged in the second housing seat 31, screw-threaded therein in this case, formed in the beam 4, 5.

As shown in Fig. 4, the head of each screw 30 is at the inside of the articulation element 6 and abuts against the shell 10a, 10b, whereas the screw shank is placed in the second housing seat 31 of the respective beam 4, 5.

The first holding structure 2a of device 1 is secured to the second end 3b of the articulated arm 3 by a link 33 and an auxiliary beam 34; connection between beam 34 and structure 2a is obtained by virtue of engagement means such as an articulated joint or the like. Link 33 is interposed between the second end beam 5 and the auxiliary beam 34.

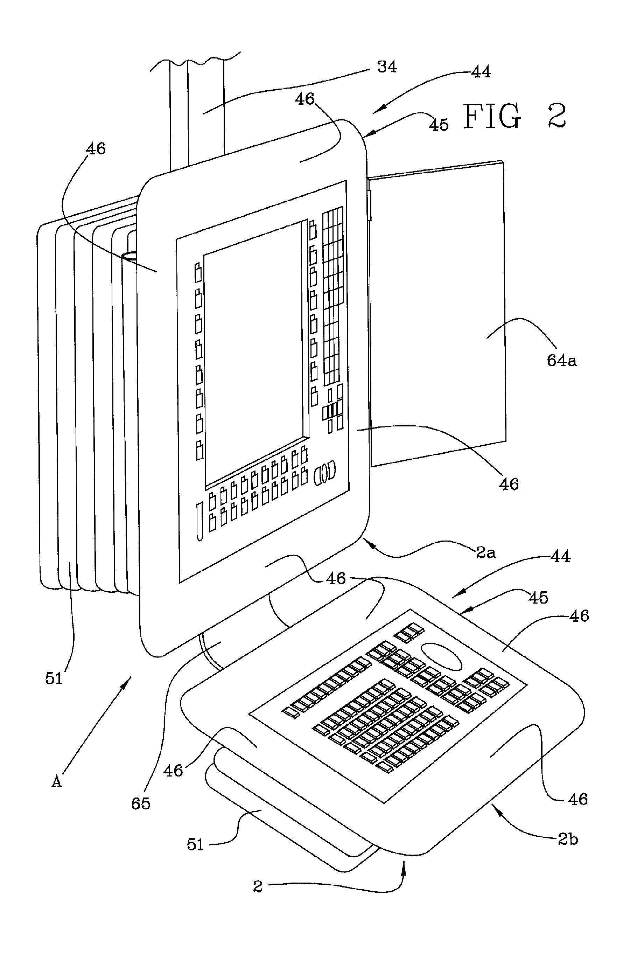

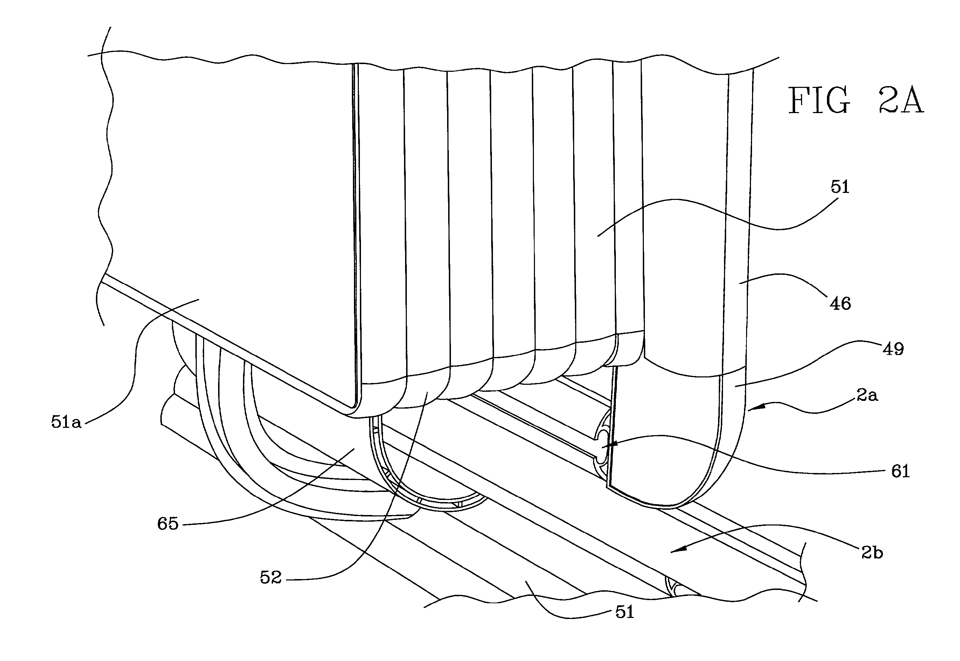

Link 33 is made up of a first portion 35 that, as clearly shown in Figs. 2 and 3, is similar in structure to one of the portions 7a, 7b of the articulation element 6 and therefore is adapted for engagement with the end beam 5 through its lug 8.

In fact, the first portion 35 of link 33 has an outer shell 10 and an open-ended element of substantially tubular shape 11 fastened to the inside of shell 10.

Link 33 further comprises a second portion 36 complementary to the first one 35 and defining together with the first portion 35, an ellipsoid externally similar to the articulation element 6 and extending along a respective major axis V which is coincident with the longitudinal extension direction of the auxiliary beam 34.

The second portion 36 too comprises a lug 37 conforming in shape to one of the first two housing seats 22 of the end beam 5.

Both lugs 8, 37 of the first 35 and second 36 portions of link 33 are inserted in the end beam 5, so that the two portions 35, 36 are rigidly secured to the end beam 5 and to each other.

In more detail, the second portion 36 has an outer shell 38 extending around the major axis V of the ellipsoid, and an element of substantially tubular shape 39 fastened to the inside of shell 38 and axially aligned with the element of substantially tubular shape 11 of the first portion 35.

In the first embodiment shown, the tubular element 39 of the second portion 36 of link 33 has a greater diameter than the first portion 16a, 16b of the tubular element 11a, 11b of the articulation element 6.

The auxiliary beam 34 has a first end 34a inserted in the tubular element 39 of the second portion 36 and a second end 34b linked to the first holding structure 2a.

Preferably, the auxiliary beam 34 extends transversely of the articulated arm 3 and parallel to the rotation axis Y.

In more detail (Fig. 3), mounted on the first end 34a of the auxiliary beam 34 is a connecting element 40 provided with a second pin 41 with a threaded end.

The connecting element 40 is joined to the auxiliary beam 34 by third conventional connecting means 42 that in the embodiment clearly shown in Fig. 3 consists of mere screws.

The second pin 41 is inserted in the element of substantially tubular shape 11 of the first portion 35 of link 33 and held in place by a second nut 43 abutting on the disk-shaped wall 18 (Fig. 4).

For assembling of the articulated arm 3, first of all the engagement lug 8a of the first portion 7a is inserted into one of the two first housing seats 22 of the first beam 4 and fastening of same takes place by tightening screw 30 inserted in the hole 32 of shell 10a, into the respective second housing seat 31 of the first beam 4.

Following the same procedure, the engagement lug 8b of the second portion 7b of the articulation element 6 is introduced into the first housing seat 22 of the second connecting beam 5 that is offset along the rotation axis Y with respect to the first housing seat 22 of the first beam 4 and fastening of same takes place.

At this point the two portions 7a, 7b are associated with each other to form the articulation element 6 and mutually linked by inserting the first pin 13 into the engagement seat 12 defined by the tubular element 11a, 11b.

Finally, placement of the end caps 15a, 15b enables achievement of the entire articulation element 6 of ellipsoidal shape and complete concealment of screws 30 and pin 13.

The mentioned procedure is repeated for possible assembling of second subsequent beams 5.

Mounting of link 33 on the second end 3b of arm 3 is quite similar to the above description. In fact, the engagement lug 8 of the first portion 35 of link 33 is inserted into and fastened to one of the two first housing seats 22 of the second beam 5. Likewise, the engagement lug 37 of the second portion 36 of link 33 is inserted into and fastened to the remaining one of the two first seats 22.

The auxiliary beam 34 is associated with the second portion 36 of link 33 by introduction of the second pin 41 placed on the second end 34a of the auxiliary beam 34, into the respective element of substantially tubular shape 11 of the first portion 35 of link 33 and fastened thereto by means of the second nut 43.

The end cap 15 is finally positioned on the first portion 34a of link 33 for concealment of pin 41 and nut 43.

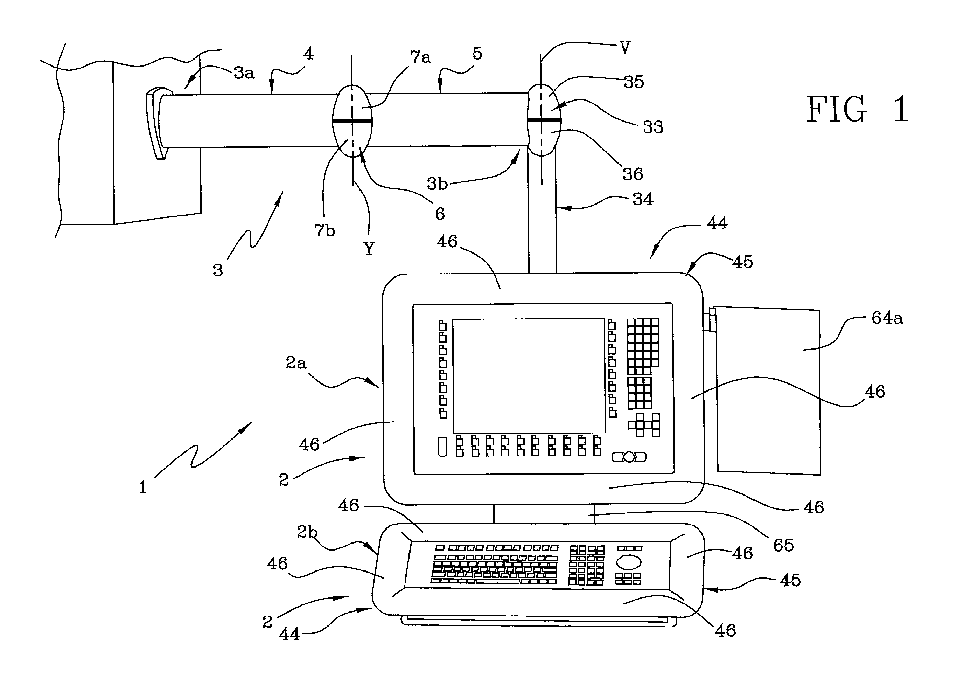

With reference to Figs. 1 and 2, each of the holding structures 2a, 2b comprises a support frame 44 that, in the embodiment shown, defines a rectangular perimetric framework 45.

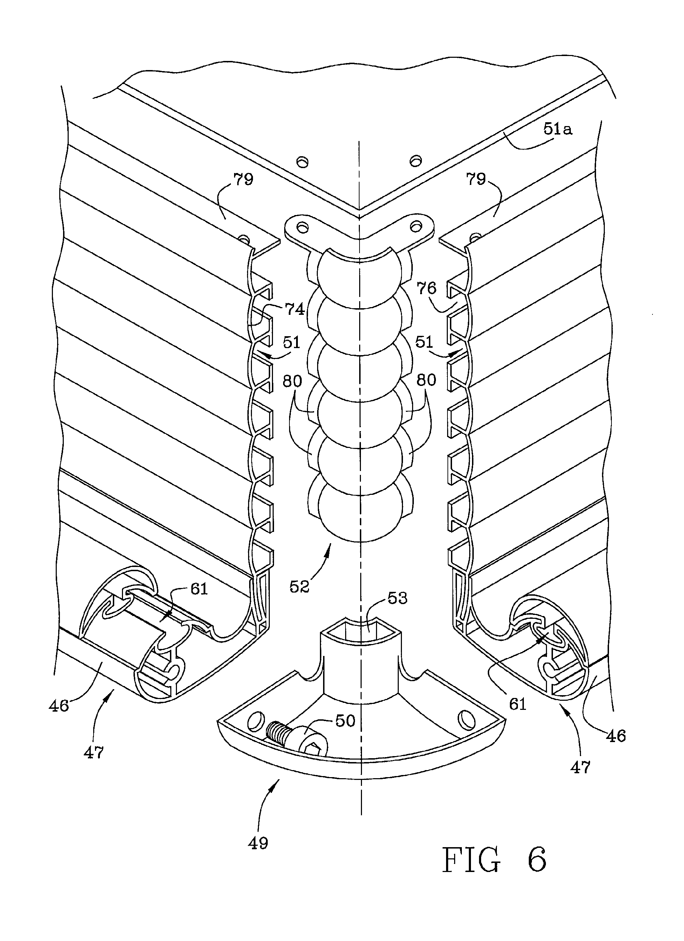

The sides 46 of framework 45 are made up of lengths of the same main section member 47 of constant section 48 made of aluminium for example, as shown in Figs. 5 and 6.

Two adjacent sides 46 are joined by a corner frame portion 49 connected to the ends of said sides 46 by fourth conventional connecting means 50; obviously, this corner frame will be then covered with an appropriate closing element.

The holding structure 2a, 2b further comprises a side wall 51 extending from frame 44, transversely of the plane defined by the frame 44 itself, and a closing wall 51a resting on the free edges of the side wall 51, to define an open box-shaped structure. More particularly, as shown in the accompanying figures, one side wall 51 extends from each side 46 of the rectangular frame 44.

Obviously, walls 51 of varying length can be provided or, alternatively, walls 51 in the form of modules that can be conveniently assembled so as to vary the holding structure depth.

Two contiguous side walls 51 are joined by a corner wall portion 52 removably engaged in a respective seat 53 formed in the corner frame portion 49.

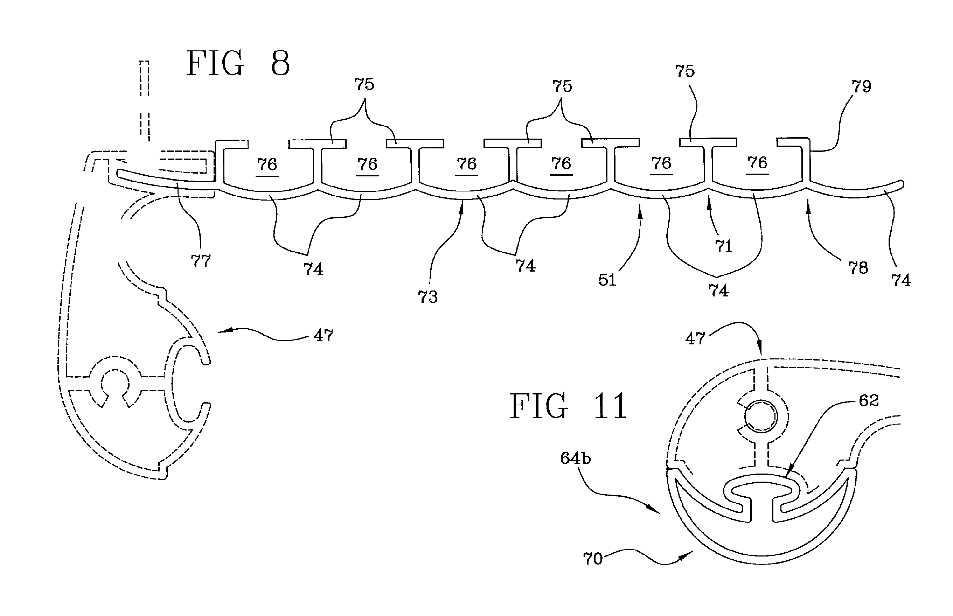

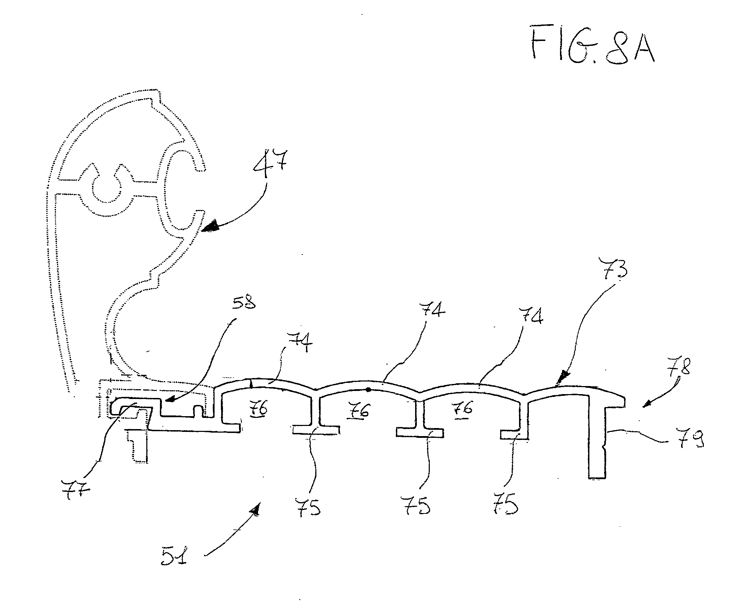

In detail, with reference to Fig. 7, the main section member 47 defining the sides 46 of the perimetric framework 45 shows, in cross-section, a closed profile 54 extending in a prevailing direction T and defined by a contour wall 55 and possibly one or more inner walls 56.

Advantageously, defined on the contour wall 55 is a first engagement element 57 and a second engagement element 58. In the first embodiment shown the second engagement element 58 consists of a slit substantially orthogonal to the prevailing extension direction T of the closed profile 54, to house the side wall 51 (Fig. 8). The side wall 51 is orthogonal to the prevailing extension direction T of the closed profile 54, and the first engagement element 57 when the holding structure 2a, 2b is assembled, keeps outside the space confined by the side walls 51.

The first engagement element 57 of the main section member 47 is defined by a hollow space 59 formed in the contour wall 55 and by a pair of wings 60a, 60b extending in a direction close to each other from opposite ends of the hollow space 59 itself. In addition, the first engagement element 57 extends along the whole longitudinal extension of the section member 47, to define a guide 61 adapted to receive a tailpiece 62 conforming in shape thereto and belonging to a connecting support 63.

Guide 61 extends therefore at least partly along the extension of the support frame 44.

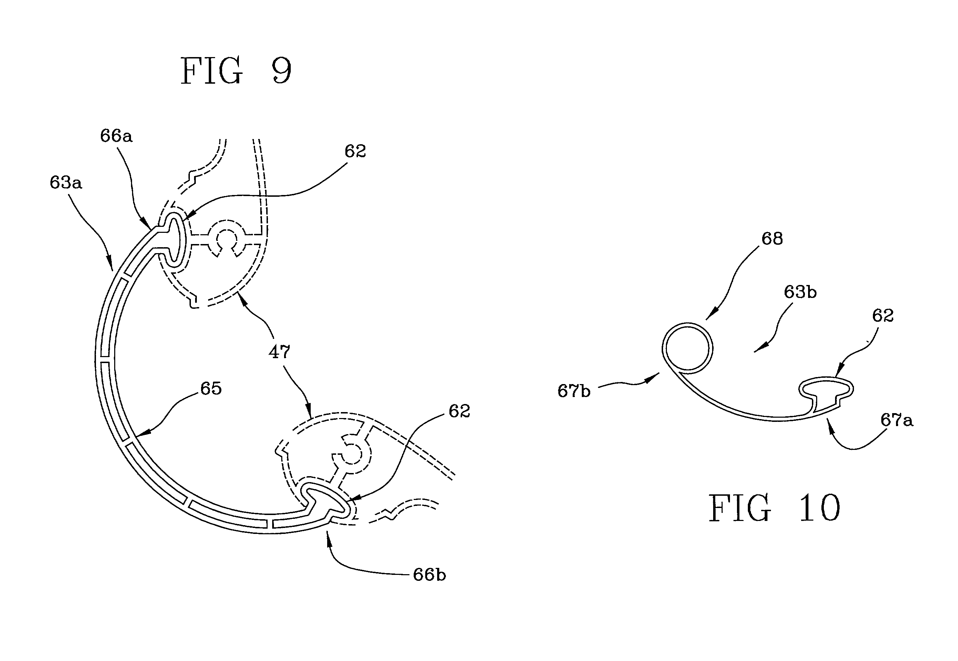

The connecting support 63 may have different conformations depending on the functions it must perform. For instance, in the accompanying drawings there is shown a first connecting support 63a (Fig. 9) for mutual connection of the two holding structures 2a, 2b and a second connecting support 63b (Fig. 10) for connection of an auxiliary element 64 (in this case a bookstand 64a) to the first holding structure 2a.

Alternatively, the tailpiece 62 can be directly formed on the auxiliary element 64. The auxiliary element 64 shown in Fig. 11 is a handle 64b for engagement with the first holding structure 2a for example, to facilitate displacement of same. Handle 64b has a handgrip integrally connected to the tailpiece 62. In the embodiment shown handle 64b is made starting from an auxiliary section member 70 of closed section.

As shown in Fig. 9, the first connecting support 63a comprises, seen in section, a curved portion 65 provided with two mutually opposite ends 66a, 66b. Each end 66a, 66b is provided with the tailpiece 62 having a shape matching that of the first engagement element 57 so that each end can be engaged with two holding structures 2a, 2b both provided with said first engagement element 57.

Shown in Fig. 10 is the section of the second connecting support 63b; at a first end 67a thereof it has the tailpiece 62 of a shape matching that of the first engagement element 57 and at a second end 67b thereof, opposite to the first one 67a, it is provided with a hinge 68 for support of the bookstand 64a.

For connection with the corner frame portion 49, the main section member 47 further has a seat 69, a threaded hole for example, for receiving fifth conventional connecting means 50, as shown in the cross-section of the closed profile 54 in Fig. 7.

Also the side wall 51 is defined by a section member 71 the cross-section of which is shown in Fig. 8. In detail, the cross-section of the section member 71 from which each side wall 51 is formed, comprises a substantially rectilinear wall 73 preferably formed of a succession of portions 74 having a slight bending, from which a plurality of T-shaped lugs 75 delimiting respective hollow spaces 76 extend.

A first end 77 of the substantially rectilinear wall 73 is conveniently shaped so as to engage in the slit defining the second engagement element 58 belonging to the main section member 47 of the perimetric framework 45.

Shown in Figs. 8 and 8a are two different embodiments of the second engagement element 58 and the corresponding first end 77.

A second end 78 of the substantially rectilinear wall 73 opposite to the first end 77 has a support portion 79 extending transversely of the substantially rectilinear wall 73 for support of the possible closing wall 51a (Figs. 5 and 7).

The corner wall portion 52 joining two contiguous side walls 51 is suitable shaped for engagement with the T-shaped lugs 75 of each side wall 51. In more detail (Fig. 6), each corner wall portion 52 comprises two series of tailpieces 80 insertable in the hollow spaces 76 bounded by the T-shaped lugs 75.

Mounting of each holding structure 2 is carried out by first joining each side 46 of the perimetric framework 45 to the respective side wall 51 and each corner frame portion 49 to a respective corner wall portion 52.

Subsequently, to each of the corner pairs (corner frame-corner wall) the side 46 of the perimetric framework 45 and the side wall 51 are joined.

Finally, the closing wall 51a is associated with the support portions 79 of the side walls 51.

At this point the first holding structure 2a is joined to the second end 34b of the auxiliary beam 34 and the second holding structure 2b is connected to the first holding structure 2a.

In more detail, for carrying out union between the two holding structures 2a, 2b, one of the two tailpieces 62 of the first connecting support 63a is inserted by sliding in the guide 61 of one of the sides 46 of the perimetric framework 45 of the first holding structure 2a, and the other tailpiece 62 in the guide 61 of one of the sides 46 of the perimetric framework 45 of the second holding structure 2b.

Subsequently, following the same procedure, insertion of handle 64b and optionally of the second connecting support 63b for support of the bookstand 64a takes place.

At this point, positioning of the electronic apparatus is made possible. In the example shown in Figs. 1 and 2, the first holding structure 2a is adapted to receive a flat display (only diagrammatically illustrated) and the second holding structure 2b may contain a keyboard (only diagrammatically illustrated).

The electric cables run through the beams 4, 5, 34 and, for inspection of same or for carrying out possible maintenance operations, it is sufficient to remove the closing element 24 of each beam 4, 5, 34 from the structural element 23 by opening the ends 29 of the closing element 24 wide, to disengage them from grooves 28 (Fig. 3).

The invention achieves important advantages.

It should be recognized first of all that the support device in accordance with the invention is aesthetically agreeable and of valuable quality. In particular, the articulated arm completely conceals all the element-fastening means, such as screws and bolts, from the sight.

In addition, the articulated arm in accordance with the invention enables quick and easy access to the electric cables for inspection and/or servicing of same. Furthermore, the articulated arm can be easily disassembled.

It will be appreciated that the articulated arm in accordance with the present invention is made up of a modular structure consisting of a reduced number of parts. For instance, the portions of the articulation elements are pieces to be obtained from a single mould; the beams of the articulated arm belong to a single section member, as well as the walls and frame of the holding structures.

It will be also recognized that the holding structures can be easily connected with each other or with other auxiliary elements by means of the guide formed at their edge. In particular, this advantageous feature enables the additional elements to be positioned along the edge of each structure at the most appropriate positions without the necessity to modify said structure based on particular requirements.

## Claims

1. An articulated arm preferably for supporting electronic apparatus, comprising:
- a first connecting beam (4) rigidly connectable, at a first end (3a) of the arm (3), to a support structure;
- at least one second connecting beam (5; 34) consecutively in engagement with the first beam (4);
- at least one articulation element (6; 33) operatively active between the first beam (4) and said at least one second beam (5; 34), to rotatably connect, about a respective rotation axis (Y; V), said first beam (4) to said at least one second beam (5; 34);
**characterized in that** said at least one articulation element (6; 33) comprises:
- a first portion (7a; 35) preferably having an engagement lug (8a; 8) insertable in the first beam (4);
- a second portion (7b; 36) preferably rotatably linked to the first portion (7a) about said rotation axis (Y) and preferably having an engagement lug (8b; 37) insertable in the second beam (5);
- first connecting means (9; 40) designed to join the first portion (7a; 35) to the second portion (7b; 36), and disposed internally of the articulation element (6);
- second connecting means (30) designed to join the first portion (7a; 35) to the first beam (4) and the second portion (7b; 36) to the second beam (5; 34) and disposed internally of the articulation element (6) and the respective beam (4, 5; 34), said first (4) and second (5; 34) beams being rotatably in engagement with each other around the respective rotation axis (Y; V) .

2. An articulated arm as claimed in claim 1, **characterized in that** each of said first portion (7a) and second portion (7b) of the articulation element (6) has an outer shell (10a, 10b) extending around the rotation axis (Y) and an open-ended element of substantially tubular shape (11a, 11b), fastened to the inside of the shell (10a, 10b) and substantially in coaxial relationship with the rotation axis (Y) itself.

3. An articulated arm as claimed in claim 2, **characterized in that** the outer shell (10a, 10b) of each of said first portion (7a) and second portion (7b) comprises a main body (14a, 14b) integral with the element of substantially tubular shape (11a, 11b) and an end cap (15a, 15b) removably connected to the main body (14a, 14b).

4. An articulated arm as claimed in claim 1, **characterized in that** the elements of substantially tubular shape (11a, 11b) of said first portion (7a) and second portion (7b) lie consecutively of each other along the rotation axis (Y), to define an engagement seat (12) extending along the rotation axis (Y) and adapted to receive the first connecting means (9) joining the first portion (7a) to the second portion (7b).

5. An articulated arm as claimed in claim 1, **characterized in that** the first (7a) and second (7b) portions of the articulation element (6) have the same conformation.

6. An articulated arm as claimed in claim 1, **characterized in that** the second fastening means (30) for connection between the first portion (7a) and the first beam (4) and between the second portion (7b) and the second beam (5) are operatively active along a longitudinal extension of each lug (8a, 8b).

7. An articulated arm as claimed in claim 1, **characterized in that** said first (4) and second (5) connecting beams each have a housing seat (22) extending at least partly along a longitudinal extension direction (X) of the beam (4, 5) and conforming in shape to the lug (8a, 8b) of the respective portion (7a, 7b).

8. An articulated arm as claimed in claim 1, **characterized in that** said first (4) and second (5) connecting beams (5) each internally define a respective hollow passage space (25) extending along the longitudinal extension direction (X) of the respective beam (4, 5).

9. An articulated arm as claimed in claim 8, **characterized in that** said first (4) and second (5) connecting beams each comprise a structural element (23) and a closing element (24) removably in engagement with the structural element (23) along the longitudinal extension direction (X) of the respective beam (4, 5), to define said hollow passage space (25), the closing element (24) being preferably snap-fitted on the structural element (23).

10. An articulated arm as claimed in claim 9, **characterized in that** the structural element (23) in cross-section has at least one closed profile (27).

11. An articulated arm as claimed in claim 8, **characterized in that** the first portion (7a) and second portion (7b) delimit a chamber (21) extending around the rotation axis (Y) and each have an opening (26a, 26b) for communication with the hollow passage spaces (25) of the respective beams (4, 5) to define a path extending along the whole extension of the arm (3).

12. An articulated arm as claimed in claim 1, **characterized in that** it further comprises an auxiliary beam (34) having a longitudinal extension direction (V) substantially parallel to the rotation axis (Y), said auxiliary beam (34) being located at a second end (3b) of the articulated arm (3), to connect the articulated arm (3) with a holding structure (2), a link (33) being interposed between the second end beam (5) and the auxiliary beam (34).

13. An articulated arm as claimed in claim 12, **characterized in that** the link (33) comprises a first portion (35) having an engagement lug (8) insertable in the second beam (5) and a second portion (36) integral with the first portion (35) and having an engagement lug (37) insertable in the second beam (5).

14. An articulated arm as claimed in claim 13, **characterized in that** the first portion (35) of the link (33) has an outer shell (10) extending around the longitudinal extension direction (V) of the auxiliary beam (34) and an open-ended element of substantially tubular shape (11) fastened to the inside of the shell (10) and in coaxial relationship with the longitudinal extension direction (V).

15. An articulated arm as claimed in claim 14, **characterized in that** the second portion (36) of the link (33) has an outer shell (38) extending around the longitudinal extension direction (V) of the auxiliary beam (34) and an element of substantially tubular shape (39) fastened to the inside of the outer shell (38) of said second portion (36) and axially aligned with the element of substantially tubular shape (11) of the first portion (35).

16. An articulated arm as claimed in claim 15, **characterized in that** the auxiliary beam (34) has a first end (34a) inserted in the tubular element (39) of the second portion (36) of the link (33).

17. A process for assembling an articulated arm, preferably for supporting electronic apparatus, comprising the following steps:
- setting a first connecting beam (4) rigidly connectable, at a first end (3a) of the arm (3), to a support structure;
- setting at least one second connecting beam (5; 34);
- rotatably engaging the second connecting beam (5; 34) around a respective rotation axis (Y; V), consecutively of the first beam (4), by interposition of at least one articulation element (6; 33), **characterized in that** said step of mutually engaging the first and second connecting beams comprises the following sub-steps:
- inserting an engagement lug (8a; 8) of the articulation element (6; 33) in the first beam (4; 5);
- inserting an engagement lug (8b; 37) of the articulation element (6; 33) in the second beam;
- securing the articulation element (6; 33) to the first beam (4; 5) by second connecting means (30) located internally of the articulation element (6; 33) and of the beam (4; 5);
- securing the articulation element (6; 33) to the second beam (5; 34) by second connecting means (30) located internally of the articulation element (6; 33) and of the beam (5; 34); and
- rotatably engaging the first (4; 5) and second (5; 34) beams with each other around the rotation axis (Y; V) by first connecting means (9; 40).

18. A process as claimed in claim 17, **characterized in that** the steps of securing the articulated element (6) to the first and second beams (4, 5) are carried out before the step of engaging the first portion (7a) with the second portion (7b).
